# EUROPEAN PATENT APPLICATION

(11) **EP 1 748 184 A2**
(43) Date of publication of application: **31.01.2007**
(21) Application number: 06253913.5
(22) Date of filing: 27.07.2006
(51) Int. Cl.: F03D 9/00, F03D 11/00

(54) **Method and apparatus for reducing wind turbine noise**

(30) Priority: 29.07.2005 US 192690
(71) Applicant: General Electric Company, Schenectady, NY 12345 (US)
(72) Inventor: Bonnet, Laurent, 48432 Mesum (DE)
(74) Representative: Bedford, Grant Richard

(57) **Abstract**

A method for controlling noise from a wind park (100) that has a plurality of wind turbines (102) includes monitoring noise emission from the wind turbines in at least a near field area (104) and utilizing a transfer function of noise emission to determine a noise impact importance of the wind turbines at one or more locations (112) in a far field area beyond a boundary (104) of the wind park. The method further includes determining which, if any, wind turbines to operate in a noise-reduced operation mode in accordance with the noise impact importance determination and controlling operation modes of the wind turbines in accordance with the determination of which, if any, wind turbines to operate in a noise reduced mode.

## Description

This invention relates generally to power generation systems and more particularly to methods and apparatus for reducing noise impact from wind turbine installations.

In many parts of the world, the issuance of permits for wind turbine installations is based upon the environmental noise impact effected or potentially effected by the installation. For example, in most European countries, a maximum (fixed) sound pressure level is set by type of land area (agricultural, industrial, residential, or other) in the vicinity of wind turbine park boundaries, or in some noise regulation cases, the approach of industrial noise relative emergence is favored. Noise emergence is defined herein as the relative noise level increase related to an industrial installation with reference to the initial, existing background noise level.

At least three known methods exist for controlling noise from wind turbine installations. In a first known method described in U.S. Patent No. 6,688,841, permanent noise monitoring is based on a maximum absolute noise level, regardless of the noise contribution of the wind turbine or turbines. Thus, a wind park may be forced to run in a reduced noise operating mode irrespective of the contribution to noise made by the wind turbine or turbines. For example, a reduced noise operating mode may be entered when a vehicle on the road, a tractor, a heating, ventilation, and air conditioning (HVAC) system or other device operating in the vicinity of the monitoring system produces excess noise.

In another known noise reduction method, permanent noise monitoring based on wind direction noise projection is used. However, this method may not necessarily lead to proper turbine noise reduction because wind turbine rotor noise exhibits sound directivity not necessarily maximum in down-wind direction. Also, wind gradient induced acoustic convection can be of least importance compared to sound propagation celerity or even compared to large atmospheric air temperature gradient induced acoustic refraction effects. Thus, wind direction statistics may not adequately address relevant noise contributions.

In yet another known noise reduction method, control is based on a simplified atmospheric sound propagation model (ISO 9613). This method may lead to dramatic energy capture loss as atmospheric propagation effects above mentioned (air temperature gradient, wind gradient, and site topography) are not taken into account. Moreover, a fixed basic acoustic model does not dynamically adapt to changing site background acoustic conditions.

In one aspect, the present invention therefore provides a method for controlling noise from a wind park that includes a plurality of wind turbines. The method includes monitoring noise emission from the wind turbines in at least a near field area and utilizing a transfer function of noise emission to determine a noise impact importance of the wind turbines at one or more locations in a far field area beyond a boundary of the wind park. The method further includes determining which, if any, wind turbines to operate in a noise-reduced operation mode in accordance with the noise impact importance determination and controlling operation modes of the wind turbines in accordance with the determination of which, if any, wind turbines to operate in a noise reduced mode.

In another aspect, the present invention provides an apparatus for reducing noise impact from a wind park having a plurality of wind turbines. The apparatus includes at least one site reference microphone and a plurality of site boundary area microphones, and a computer configured to monitor noise emission from the wind turbines utilizing the site reference microphone(s) and the plurality of site boundary microphones. The computer is further configured to utilize a transfer function of noise emission to determine a noise impact importance of the wind turbines at one or more locations in the far field beyond a boundary of the wind park and to determine which, if any, wind turbines to operate in a noise-reduced operation mode in accordance with the noise impact importance determination. The computer is further configured to control operation modes of the wind turbines in accordance with the determination of which, if any, wind turbines to operate in a noise reduced mode.

In yet another aspect, the present invention provides a wind park for generating electrical energy at a reduced far field area noise impact. The wind park includes a plurality of wind turbines, at least one site reference microphone and a plurality of site boundary or far field area microphones, and a computer system configured to monitor noise emission from the wind turbines utilizing the site reference microphone(s) and the plurality of site boundary microphones. The computer system is further configured to utilize a transfer function of noise emission to determine a noise impact importance of the wind turbines at one or more locations in a far field area beyond a boundary of the wind park, and to determine which, if any, wind turbines to operate in a noise-reduced operation mode in accordance with the noise impact importance determination. The computer is further configured to control operation modes of the wind turbines in accordance with the determination of which, if any, wind turbines to operate in a noise reduced mode.

It will thus be appreciated that various configurations of the present invention permit noise far field area noise impact (immission) of a wind turbine park to be controlled while allowing increased electrical energy output from the wind turbine park relative to known methods and systems for controlling noise.

Various aspects and embodiments of the invention will now be described with reference to the accompanying drawings, in which:
Figure 1 is a map of a wind turbine park configuration of an embodiment of the present invention.
Figure 2 is a map of the wind turbine park configuration of Figure 1, showing locations of relatively persistent road noise.
Figure 3 is a map of the wind turbine park configuration of Figure 1, showing locations of high and enhanced noise sensitivity.
Figure 4 is a drawing of a typical wind turbine time spectrum noise analysis chart.
Figure 5 is a schematic block diagram of a signal acquisition system configuration used in some configurations of the present invention.
Figure 6 is a schematic block diagram of a configuration of a control network of the present invention for analyzing and controlling noise from a wind turbine park.

As used herein, "emission" with an "e" is a machinery or product noise generation that is attributed tot his machinery or product an can be measured in the near field area to determine the corresponding generated acoustic power (the measured quantity being the sound power level). "Immission" with an "I" is the far field area noise impact, often measured and qualified by noise map as a result of the combination of noise sources making noise in the far field with respect to any previous existing background noise map. Emission is thus a source term, while immission is the consequence of emission, i.e., the noise footprint or impact within the reception area. Also, as used herein, the terms "wind turbine park" and "wind park" are considered synonymous.

Technical effects of some configurations of the present invention include the reduction of noise impact produced by a wind park having a plurality of wind turbines, while enabling increased power production from the wind park. The manner in which these technical effects are achieved will become apparent from the description below.

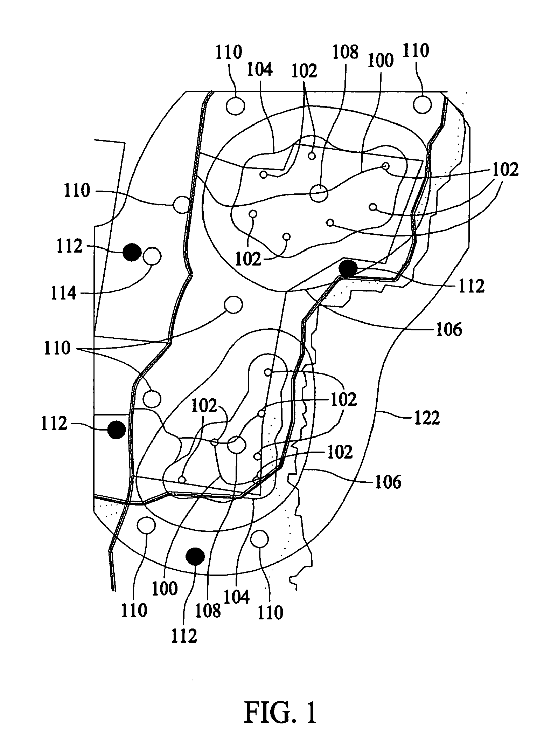

In some configurations of the present invention and referring to Figure 1, a wind turbine park 100 comprises a plurality of wind turbines, some of which are labeled as wind turbines 102. Adaptive noise control used in some configurations of the present invention to selectively reduce noise impact from wind parks 100 only when an emerging contribution is detected. Noise signature recognition in some configurations is provided in some configurations by time and frequency signal analysis, wherein wind turbine 102 noise is recognized and differentiated from background noise. In some configurations, the noise recognition system uses a noise signature difference and differential noise level rather than absolute noise levels. An adaptive, self-learning algorithm implicitly integrates large noise atmospheric propagation variations that are not supported by noise reduction techniques that assume "fixed weather model." Advantage is take of extraneous background noises and favorable atmospheric conditions, when possible, to mask or reduce wind turbine noise, so that wind turbines do not have to be put in a reduced noise operating mode when ambient conditions are favorable. Noise impact requirements and site sensitivity requirements can be met with various configurations of the present invention and noise impact can be determined periodically (i.e., yearly) and compared to or computed as a function of energy yield loss. An adaptive, self-learning neural network algorithm can detect and qualify acoustic transfer functions from near field microphones and far field microphones in order to determine individual wind turbine noise contribution based on energy, time and frequency analysis (acoustic signature) as well as best noise reduction scenario in a dynamic and adaptive manner.

Adaptive selective noise control can be used for achieving specific noise-reduction targets. For example, some configurations of the present invention can be used to control wind turbines 102 as a function of global noise emergence (i.e., sound power contribution) and sensitivity mapping (i.e., a reception area weighting factor). Some configurations of the present invention can be used to avoid unnecessarily high energy loss that would otherwise be suffered as a result of attempting to reduce noise using a fixed noise reduction method (e.g., the setting of maximum absolute levels and maximum operation levels). Some configurations can be used for both purposes.

More particularly, in some configurations of the present invention, in a near field 104 of wind turbine park 100, a near-field noise of relatively high intensity is created when wind turbines 102 are in operation. The noise from wind turbines 102 can generally be characterized as a repetitive "shwoosh-shwoosh" sound as each turbine 102 rotates. A contour 106 representing an approximate boundary of wind turbine park 100 and enclosing an area of lesser noise intensity surrounds near field 104. In some configurations of the present invention, noise emission from wind turbines 102 are monitored utilizing permanent monitoring outdoor microphones. The permanent monitoring outdoor microphones include reference position microphones 108, which are outdoor microphones located installed in a near field inside wind park 100 to monitor noise emission in a near field. The permanent monitoring outdoor microphones also include boundary position microphones 110, which are outdoor microphones located slightly beyond boundary limits 104 of wind park 100.

Ground level weather stations are not required in all configurations of the present invention, however, in some configurations, ground level (i.e., up to about 4 meters above ground) weather stations (not shown in Figure 1) can optionally be installed with reference position microphones 108. Additional sensitive area microphones 112 and/or addition ground level weather stations (not shown in Figure 1) can optionally be installed at or near particular impact areas 114, which may include, for example, residential areas. As a baseline to an optional ground weather station, a signal from an anemometer and an outside temperature probe on each wind turbine 102 can be used as an "altitude" weather station at hub height. The combination of a built-in wind turbine hub height altitude weather station and optional ground weather station can allow measurements of temperature gradient as a function of height.

In some configurations of the present invention, a near field reference microphone 108 is mounted directly on one or more of the wind turbines 102 of wind park 100. Thus, not only are microphones 110 (and in some configurations, 114) provided in the far field beyond boundary 104 of wind park 100 but also microphones 108 are provided in the near field. Far field microphones are configured to measure immissions (noise impact), near field are configured to measure emissions (noise generation), and sensitive area microphones are configured to measure immissions in sensitive areas.

In some configurations of the present invention, an estimate of background noise is also used to determine noise impact importance of wind turbines 102. For example, a background noise signature assessment is established by a neural network configured to recognize extraneous noise sources when wind turbines 102 are not operating and for short sampling periods on windy days and nights to assess seasonal, daily and hourly site wind background masking noise. Background masking noise can include, for example, road noise, vegetation wind noise, turbulent wind ground noise, park noise, and industrial noise, as well as other noise not related to the wind turbine or turbines. The background noise estimate may vary as a function of time of year and/or time of day.

For example, in some configurations of the present invention, reference position microphones 108 are used to establish wind turbine noise signatures for each wind turbine 102 in wind park 100 and to establish a comparison with boundary position microphones 110 to provide noise correlation (e.g., for the purpose of determining a noise transfer function as a function of direction, atmospheric conditions, and/or other variables). Noise signatures can depend upon blade type and also on the pitch of the blades of a wind turbine 102. Thus, reference position microphones 108 can be used with the noise transfer function to determine a noise impact importance of wind turbines 102 and to determine which, if any, wind turbines 102 to operate in a noise reduced mode in accordance with the noise impact importance determination. In one method, for example, signatures can be determined using acoustic signature signal analysis using energy, time, frequency analysis regarding wind turbine related noise and differentiate from wind park extraneous noise sources such as turbulent wind ground noise, vegetation wind noise, road noise, aircraft noise, agricultural machinery noise, industrial noise, and other extraneous noise sources not related to the wind turbines. In another method, a differential noise analysis determines the difference between wind turbine related noise and all extraneous noises levels is permanently evaluated. This difference is also referred as wind turbine nose emergence, the primary acoustic target for noise reduction. One method for operating the wind turbine in noise-reduction mode includes sending control commands and instructions to individual wind turbines to fit to primary and secondary acoustic targets.

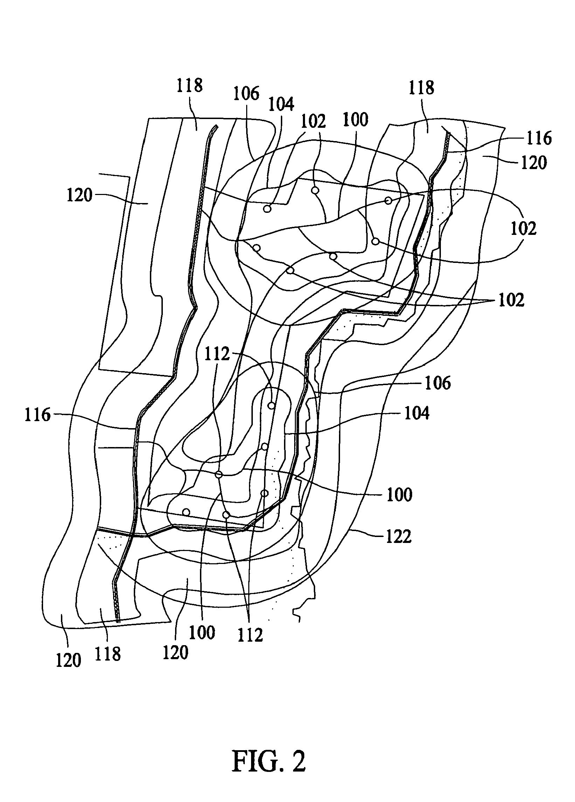

For example, and referring to Figure 2, a relatively persistent road noise can be expected around major highways and roads 116, as indicated by a contour 118 enclosing a high road noise region, and a contour 120 enclosing between itself and contour 118 enclosing a moderate road noise region. Road noise is a part of existing background noise and psychoacoustically masks wind turbine noise. Background noise or other types may be present, depending upon the location of wind park 100. For example, background noise may include any combination of noise sources, including road noise, vegetation wind noise (e.g., noise blowing through trees), turbulent wind ground noise (i.e., noise resulting from turbulent wind flows near the ground), park noise (e.g., wind noise from wind blowing through cultivated fields, animal noise, and/or park machinery noise), or industrial noise (noise from industrial plants). Because noise from these sources tends to be repetitive, quasi-persistent, and fixed in location, a neural network can be used to learn and to recognize these extraneous noise sources in a manner described below.

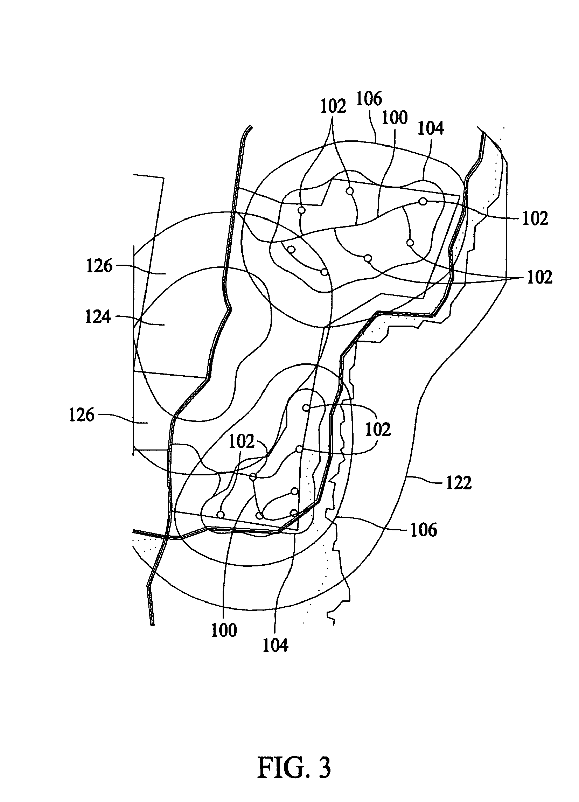

In addition, in some configurations of the present invention and referring to Figure 3, noise sensitivity may be greater in some areas than in others. For example, an area 124 having a high concentration of residences may be targeted as an area of high residential noise sensitivity. Additional areas, for example, an area 126 surrounding area 124 in the example shown in Figure 3, may comprise an area of somewhat enhanced residential noise sensitivity. In general, there may be any number of such areas, not necessarily surrounding one another, around any given wind park 100. The noise impact importance are, in some configurations, weighted (for example, by weighting an effective microphone amplification) in accordance with location using a noise impact map. The weighting in some configurations is also time-dependent, as typical acceptable noise levels near residential areas or typical noise emergence levels over specific time periods can vary in accordance with, for example, time of day, day of week, or time of year. Some areas in the map in the vicinity of the wind park are determined to be critical noise sensitive areas in the far field. These areas receive specific and stringent local acoustic targets or goals and are secondary acoustic targets for noise reduction.

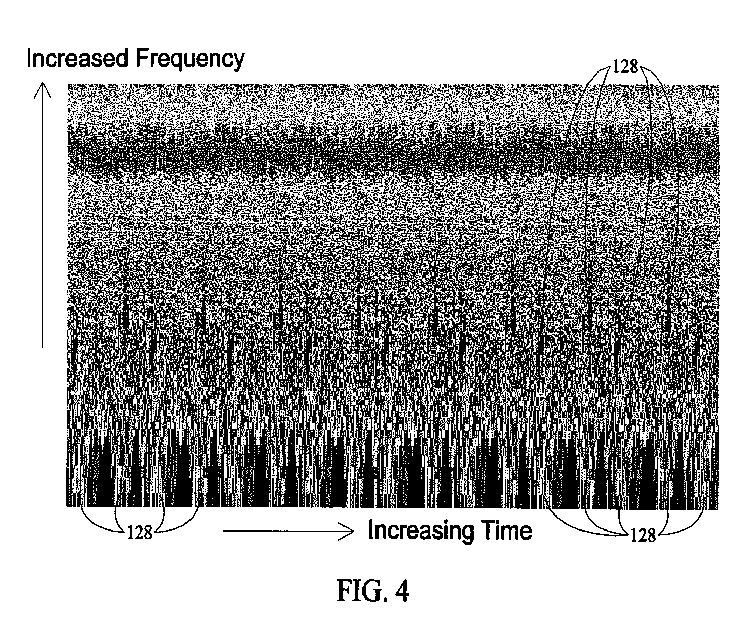

Some configurations of the present invention recognize wind turbine noise impact to minimize or at least reduce energy yield loss. For example, in some configurations, wind turbine 102 loss is recognized in the far field by periodic impulsivity noise, i.e., a "swoosh-swoosh" related to blade noise rotation. Also, in some configurations, wind turbine noise is recognized in the far field when its noise spectrum differs from site typical background noise, i.e., there is a difference in spectral content of the noise. More particularly, and to referring to a typical wind turbine time spectrum analysis chart shown in Figure 4, it can be seen that wind turbine blade aerodynamic noise 128 is of an impulsive, repetitive nature due to blade rotation. Rotating noise convection propagation effects also tend to make the sound be perceived as pulsating. The measurement example shown in Figure 3 indicates that pressure variations in a typical wind condition are on the order of 3 to 6 dB with a period on the order of 1 second for a large wind turbine, which is the blade passing frequency in the typical wind condition. Such periodic, impulsive noise signatures can be recognized by, for example, a neural network, in order to discriminate between noise sources of different types of noise sources having a different acoustic signature. Noise sources having different acoustic signatures can include different wind turbines 102 in a wind park, which may also have a different transfer function (i.e., a different relationship between a noise generated by a particular wind turbine 102 in reference position microphone 108 and the noise propagated to a boundary position microphone 110 or to another location).

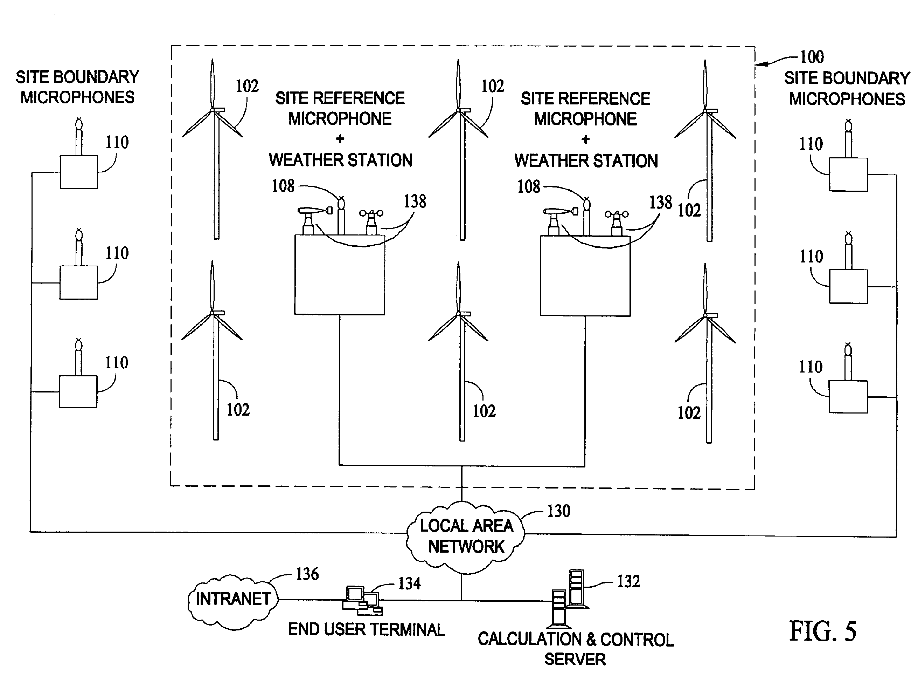

In some configurations and referring to Figure 5, a signal acquisition system comprises a plurality of sensors (e.g., sensors 108, 110, and 138) located at various positions around wind park 100. For example, a plurality of wind turbines 102 comprise wind park 100 in Figure 5. Site reference microphones 108 are provided within wind park 100 to record a noise generated by wind turbines 102 when in operation. A plurality of site boundary microphones 110 are also provided, in part to measure a correlation between noise generated by wind turbines 102 at site reference microphones 108 and at locations at which site boundary microphones 110 are located. Weather stations 138 are also provided in some configurations to provide weather data indicative of atmospheric variations within a region 122 (see Figure 3) within which control of wind turbine noise is of interest. In configurations in which weather data is available, the weather data can be utilized along with a stratified atmospheric noise propagation model in making noise impact importance determination. An advantage offered by some configurations of the present invention is that atmospheric propagation varies dramatically with temperature, so that every time a specially stratified atmosphere occurs, propagation of noise takes a curved path that bends towards colder temperature. During daytime in the summer, when there is very hot ground because of the sun beaming down but fresh air at 100 meters, sound waves bend up towards the sky. This effect is favorable for a wind park operator, because most of the noise energy will tend towards the sky rather than towards the ground. In the evening of the same day, the air may cool dramatically, and with natural convection from the hot ground, a temperature inversion may occur. Temperature inversions tend to be strong at the end of the summer and autumn, with fresh air near the ground and hot air at higher altitudes, e.g., 100 meters. At such times, sound waves are bent to the ground, making a wind park 100 installation appear louder than it was during the day. Thus, noise impact may depend on the hour of the day and on the season.

Noise variation due to temperature gradients can be as high as 10 to 20 dB, and noise variation due to wind variations can be another 5 to 10 dB. Dry air at 20% humidity can cause frequency-dependent variations that can be as high as a 10 dB absorption at 2 kHz, with a minimum absorption at high humidity over 1000 meters. A worst case can be assumed to be about 1 dB absorption every 100 meters.

Background noise depends upon ambient conditions and can be learned. An important feature of configurations of the present invention is that some configurations take advantage of huge variations in attenuation relating to atmospheric conditions (e.g., especially temperature and winds) to increase the allowable power generated by one or more wind turbines at a wind park. This advantage occurs because it is not necessary to operate at worst-case noise reduction conditions in most instances as the result of the sensing of and knowledge gained about noise propagation.

Data from site boundary microphones 110 and from site reference microphones 108 (and from weather stations 138, if present) is communicated via a local area network 130 via a digital signal bus to a computer 132, which serves as a calculation and control server. An end user terminal 134 is also provided to allow users to view data concerning the operation of wind park 100, including wind turbines 102, measured noise levels, and, where available, atmospheric conditions. An intranet 136 may also be provided to allow more widespread viewing. Additionally, end user terminal 134 and/or intranet 136 may be used to set limits for noise impact produced by wind park 100.

Either or both local area network 130 or intranet 136 may be replaced or augmented by other suitable networks, including wired and wireless networks and the Internet, in some configurations. In the event data is transferred over the Internet, some configurations provide additional security, such as encrypted data transmission, to prevent unauthorized control of wind park 100 and/or unauthorized interception of data.

Computer 132 in some configurations serves as a centralized data and calculation server, and can include signal analysis modules, a neural network module, and a control instruction provider module. In some configurations, intranet 136 can be accessed remotely only by a privileged user to perform system control, programming updates, and/or advanced analysis. Display 134 or a remote display may be used in some configurations to generate a display for an end user that includes a report of noise impact versus energy yield loss. In some configurations, a cost-efficient personal computer (PC) based multiple channel signal processing system is provided as computer 132.

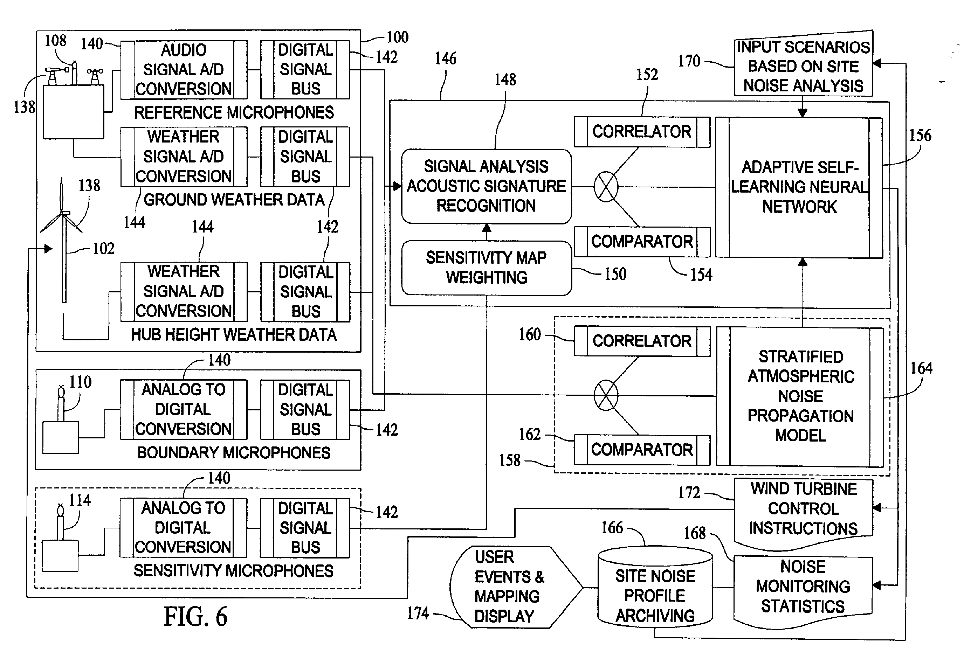

More particularly, in some configurations and referring to Figure 6, wind park 100 includes a plurality of wind turbines 102 and reference position microphones 108. Each reference position microphone 102 is provided with an audio signal A/D converter 140**,** which converts an analog noise signal received by microphone 102 into a digital signal, which is applied to a digital signal bus by a digital signal bus interface circuit 142**.** In configurations in which weather stations 138 are also provided at reference position microphones 108, weather data is also applied to a digital signal bus using an interface circuit 142. In some configurations, weather stations 138 may be provided. In configurations in which weather stations 138 are provided that generate analog signals, a weather signal A/D converter 144 is provided, as needed. In some configurations in which weather stations 138 are provided, stations 138 may also be provided with microphones 108 at or near ground level (e.g., at 4m height), and additional weather monitoring stations 138 may also be provided at hub level on wind turbines 102 to provide stratified weather data. Boundary microphones 110 are also provided, each with an A/D converter 140 and a digital signal bus interface 142**.** In some configurations, extra microphones 114 are provided as sensitivity microphones.

Data from reference microphones 108 and boundary microphones 110 is fed to a learning module 146, which in some configurations is a software module or program running in a computer such as computer 132. More specifically, data is fed to a signal analysis acoustic signature recognition submodule 148, which recognizes an acoustic signature of each wind turbine 102 in the noise picked up by microphones 108 and 110.

In some configurations, signature recognition submodule 148 utilizes frequency spectrum and time signal analysis to recognize noise signatures. Also, a control loop comprising a neural network module 156 is provided from the neural network-based permanent far field noise monitoring system comprising microphones 108 and 110 and, in some configurations, microphones 114 and/or weather stations 138 to each wind turbine 102 for individual switching of wind turbines 102 in noise-reduced operation mode. However, weather stations 138 are not required in all configurations of the present invention.

Neural network module 156 is used in some configurations to recognize a background noise signature as a function of time of year, a wind turbine noise signature as a function of wind characteristics, and a difference between background noise and wind turbine related noise (emergence). Neural network module 156 is also configured to determine a transfer function between specific wind turbines 102 and specific far field outdoor microphones 110 and/or 114, as a function of wind characteristics. The transfer functions represent propagation of noise in the atmosphere, which can be a function of the amount of water vapor, water droplets, temperature and pressure, pollution, etc. For example, a transfer function is established relating noise at a particular far field outdoor microphone and a nearby wind turbine as a function of wind speed and direction, and, in some configurations, also of wind speed and/or direction variability (i.e., wind gusts). The use of permanent far field noise monitoring ensures consistent control of noise emission impact. Monitoring noise in the far field is a first step used in some configurations before establishing a background noise signature.

In some configurations, noise picked up by sensitivity microphones 114 is also considered in recognizing signatures, and this contribution is weighted by a weighting module 150 in accordance with a sensitivity map including an indication of the most critical locations. For example, the noise sensitivity map provides high weighting of noise (and thus high noise control) in residential areas and low weighting (and thus low noise control) in non-populated areas. In some configurations, the sensitivity map weighting varies as a function of time on an hour-by-hour basis, a daily basis, and/or a seasonal or monthly basis. Correlators 152 and comparators 154 may also be used as submodules in analyzing the signals received by microphones 108, 110, and/or 114. The analyzed signal is applied to an adaptive self-learning neural network submodule 156, which determines a noise impact importance of individual wind turbines 102 at one or more locations 112 in a far field beyond a boundary 104 of wind park 100. For example, in some configurations, noise generated in residential areas where background noise is typically low and sensitivity to noise is greatest is weighted more heavily (i.e., a lower threshold is set). In some configurations, noise occurring during specific periods of time (e.g., evening hours) is more heavily weighted. These and other weighting factors can be combined as necessary to meet local requirements and/or sensibilities.

Noise immission is reviewed using far field microphones 110 and/or 114. Similarities are determined and comparisons 154 and correlations 152 are made to determined correlation in the far field with the near field to find noise impact via signature analysis. Also, neural network 156 will advantageously remember the transfer functions. So over time, more and more will be learned about the transfer function from emission to immission and how noise in the far field relates to reference microphone 108 and to wind turbine 102 physical locations. Thus, the transfer function works as a map in some configurations rather than as just a number, and is also correlated with physical positions of wind turbines 102, reference microphones 108, and other microphones 110 and/or 114.

In some configurations of the present invention, signals from weather stations 138 are also provided. These signals are provided to a weather module 158, which in some configurations is a software module or program running in a computer such as computer 132. Weather module 158 can comprise one or more correlators 160 and/or one or more comparators 162, which can be used to process the data received for application to a stratified atmospheric noise propagation model 164. Module 164, in configurations in which it is provided and used, provides input for adaptive self-learning neural network 156 to adjust the determined noise impact importance in accordance with atmospheric variations within a region 122 (see Figure 1) within which control of wind turbine noise is of interest. These atmospheric variations can include temperature and/or humidity and/or wind variations and stratifications that can affect the propagation of noise from wind park 100 to various locations. This effect, which can vary from one location to another within region 122 in some cases, can cause variations on the order of 10 to 15 dB in the amount of noise propagated from wind park 100 to some locations within region 122. For example, certain types of temperature or humidity inversions may cause sound propagated from a wind turbine to be directed upward, reducing the impact at some locations. Other conditions may increase the efficiency with which sound is propagated, increasing the impact of the noise. Weather conditions can vary locally within a small scale, so a plurality of weather stations 138 at different locations and heights are provided in some configurations of the present invention.

When a maximum emission sound pressure is reached according to specified noise emission criteria, one or more wind turbines 102 are switched into a noise reduced operation mode to meet the specified noise emission criteria. Noise emission criteria can include components related to typical periodic, impulsive turbine noise, and to typical noise emission spectra of wind turbines.

When a maximum noise emergence is reached at a specific far field outdoor microphone, a corresponding nearby wind turbine 102, for example, is switched into a noise reduced operation mode. More specifically, in some configurations of the present invention, wind turbine control instructions 172 are generated according to a determination of which, if any, wind turbines 102 are to operate in a noise reduced mode. Depending upon the noise impact assessment, which may vary not only in accordance with the actual noise generated by wind turbines 102 but also with location, time of day, season, or year, weather conditions, background noise, etc., one or more wind turbines 102 of wind park 100 may be selectively controlled by computer 136 (e.g., by pitching the blades of the turbine) into a noise-reduced operation mode. This mode reduces the electrical output of a wind turbine 102 and hence, the total output of wind park 100. However, the reduction in electrical output in some configurations of the present invention is advantageously reduced by using a noise impact assessment that not only takes into account the actual noise generated by wind turbines 102 but also noise impact location, time of day, season, or year, weather conditions, background noise, etc.. Moreover, using the noise impact assessment to control individual wind turbines 102 of wind park 100 also reduces the amount of energy output that would otherwise be lost to noise control, because the noise control need not affect all of the wind turbines 102 in wind park 100. Also, where it is determined that individual wind turbines 102 under known ambient conditions contribute more to noise impact at certain locations than do other wind turbines, those wind turbines can be targeted for noise-reduced operation mode when those ambient conditions are determined to exist by neural network 156.

To assist in learning or in initially developing a library of noise monitoring statistics 168, some configurations of the present invention utilize sensitivity microphones 114 and an archive of site noise profiles 166 to develop transfer functions and learned input scenarios 170 for adaptive self-learning neural network 156. For example, the transfer function of noise emission from reference microphones 108 and boundary microphones 110 to various locations at sensitivity microphones 114 can be determined as a function of wind, humidity, temperature, atmospheric stratification, etc. and used later to determine the noise emission at these locations without using sensitivity microphones 114. In addition, knowledge gained by self-learning neural network 156 can be used at other installations by providing archived data 116 at the other installations. Neural network 156 can be used in some configurations to refine site scenarios 170, transfer functions, and/or noise background estimates based on local observations.

A "scenario" 170 can include extreme cases in which local conditions strongly affect the noise. Scenarios 170 in some configurations are based upon yearly average propagation loss for a specific site, the wind turbine layout vs. the average noise immission profile, (i.e., an average of all the transfer functions), and the extreme cases of minimum noise impact and maximum noise impact. Average, minimum, and maximum impact are used in some configurations. In new installations of wind parks 100, all three scenarios can be provided. Others scenarios between the extremes can also be used if available. If computing power is not an issue, all the recordings that are available can be used. Neural network 156 learns and/or applies these scenarios to determine specific wind turbine 172 control instructions. Stored scenario that are "most like" a condition that currently exists, or that happens most of the time, can be used to determine the control instructions, if available. For example, if a wind is coming from the east, it may be more likely to hear certain of wind turbines 102 than if the wind is coming from other directions. If an east wind is prevalent over 75% of the year, the neural network will be take that into account.

Transfer functions and how they are related to physical wind turbine layouts in a wind far can be memorized and archived 166. Once memorized, archive 166 from one wind park (or several) can be used at another wind park with a similar configuration, or a slightly different configuration for which neural network 156 can again be used to find or refine the transfer functions. Experience from wind park to wind park can be collected and centralized so that for the each successive installation, the noise reduction system will not have to start learning from scratch, but rather can use past experiences at other wind parks 100. A reduction in the total number of microphones 108, 110, 114 can be achieved by providing a sufficient number of pre-learned transfer functions.

In some configurations, user event and mapping display 174, which may be end user terminal 134 (see Figure 5) or another terminal, for example, can be used to input special commands or instructions, including, for example, areas 124 having high residential noise sensitivity, areas 126 having enhanced residential noise sensitivity, and times of day, week, season, or year during which sensitivity is further enhanced.

In some configurations of the present invention, wind turbines 102 are switched into noise reduction operation mode when a wind turbine noise signature is recognized in the far field and that wind turbine 102 is recognized to contribute to the far field emission receiver point or points (i.e., microphone locations).

The amount of energy reduction that would otherwise been needed is reduced by reducing wind turbine noise only during periods in which the impact is quantified by noise emergence in the far field.

Advantage is also taken of the natural noise background of a site in some configurations of the present invention, so that wind turbines are not switched into a noise reduction mode when the noise of the wind turbines is masked by the natural noise background.

The noise emission control is adaptive, in that it effects a noise reduction only when a noise level is generated that exceeds specified levels. Thus, less impact on energy production occurs than would be the case if local ambient conditions that tend to reduce noise impact were ignored.

Estimates of the noise level in the far field of a wind park can take advantage of detailed, high-resolution knowledge of atmospheric conditions in some configurations of the present invention. Weather predictions, at best, are based on cubic mile cells of atmosphere, which does not provide sufficient resolution of temperature gradients in some conditions to achieve the best noise control. However, non-uniformity within these one-mile cells results in influences that are or can be significant with respect to noise propagation. For example, a 20 dB variation in noise due to temperature alone might allow, as a rule of thumb, approximately 20 dB more energy to be generated. If noise propagation is curved downward due to a temperature inversion, noise energy that would otherwise escape into the atmosphere by rising well above the ground without being heard will be brought back to the ground and become heard. In this case, some configurations of the present invention command a noise reduction mode that reduces the noise immission. Noise reduction mode can be described as a changed blade pitch angle and/or the dynamic employment of any other blade specific design features with noise reduction capabilities (mechanical devices, surface treatment devices, chemical devices, electrostatic devices, etc.) As a rule of thumb (which can vary for different wind turbines), a percentage reduction in noise is approximately equal to a percentage reduction in electrical energy output. Thus, a 20 dB advantage gained by recognizing temperature conditions that attenuate noise by 20 dB at ground level may allow some configurations of the present invention to generate generation of 100 times as much power (i.e., a 20 dB increase) from a wind turbine park 100. The full benefit may not always be achievable due to random variations in atmospheric and other ambient conditions, but the increased power generating capabilities provided by some configurations of the present invention are likely to be significant and may actually closely approach the "rule of thumb" level under favorable conditions. The greatest advantages may be achieved in situations in which a microphone 110 or 114 in the far field is at given a limit, e.g., 45 dBAs for a certain temperature level, and using a prior art method, all wind turbines 102 in wind park 100 are shut down. However, configurations of the present invention may not have to resort to shutting down a wind park 100 in this instance, because some configurations explicitly take into account atmospheric propagation effects and ambient noise. For example, a tractor or a road near the far field microphone may generate noise levels of 45 dBA or greater. A control method based on using a fixed noise limit would completely shut down the wind turbines because of this noise, even though it is not at all related to the wind turbine.

While the invention has been described in terms of various specific embodiments, those skilled in the art will recognize that the invention can be practiced with modification within the spirit and scope of the claims.

### PARTS LIST

| | |
|---|---|
| wind (turbine) park | 100 |
| wind turbines | 102 |
| near field boundary | 104 |
| contour | 106 |
| reference microphones or sensors | 108 |
| boundary (far field) microphones or sensors | 110 |
| locations | 112 |
| sensitivity (or extra) microphones | 114 |
| major highways and roads | 116 |
| contour | 118 |
| contour | 120 |
| region | 122 |
| area | 124 |
| area | 126 |
| turbine blade aerodynamic noise | 128 |
| local area network | 130 |
| computer | 132 |
| end user terminal | 134 |
| intranet | 136 |
| weather monitoring stations or instruments | 138 |
| A/D (analog/digital) converter | 140 |
| signal bus interface circuit | 142 |
| A/D converter | 144 |
| learning module | 146 |
| acoustic signature analysis submodule | 148 |
| weighting module | 150 |
| Correlators | 152 |
| comparators | 154 |
| neural network submodule | 156 |
| weather module | 158 |
| correlators | 160 |
| comparators | 162 |
| atmospheric noise propagation model | 164 |
| site noise profiles | 166 |
| archive | 166 |
| noise monitoring statistics | 168 |
| A "scenario" | 170 |
| wind turbine control instructions | 172 |
| event and mapping display | 174 |

## Claims

1. A method for controlling noise from a wind park (100) comprising a plurality of wind turbines (102), said method comprising:
monitoring noise emission from the wind turbines in at least a near field area (104);
utilizing a transfer function of noise emission to determine a noise impact importance of the wind turbines at one or more locations (112) in the far field area beyond a boundary (104) of the wind park;
determining which, if any, wind turbines to operate in a noise-reduced operation mode in accordance with the noise impact importance determination; and
controlling operation modes of the wind turbines in accordance with the determination of which, if any, wind turbines to operate in a noise reduced mode.

2. A method in accordance with Claim 1 further comprising utilizing an acoustic estimate of background noise to determine the relative noise impact importance of the wind turbines.

3. A method in accordance with Claim 1 or Claim 2 further comprising determining the transfer function of noise emission for each wind turbine utilizing reference microphones (108) and at least one of boundary limit and far field microphones (110).

4. A method in accordance with any preceding Claim further comprising using weather instruments (138) to monitor weather data indicative of atmospheric variations within a region (122) within which control of wind turbine noise is of interest, and wherein said determining a noise impact importance of the wind turbines at one or more locations in the far field (112) beyond a boundary (104) of the wind park further comprises utilizing the weather data indicative of the atmospheric variations and correlating with stratified atmospheric noise propagation effects in making said noise impact importance determination.

5. An apparatus for reducing noise impact from a wind park (100) having a plurality of wind turbines (102), said apparatus comprising:
at least one site reference microphone (108) and a plurality of site boundary microphones (110); and
a computer (132) configured to:
monitor noise emission from the wind turbines utilizing the at least one site reference microphone and the plurality of site boundary microphones;
utilize a transfer function of noise emission to determine a noise impact importance of the wind turbines at one or more locations in a far field (112) beyond a boundary (104) of the wind park;
determine whether to operate any said wind turbines in a noise-reduced operation mode in accordance with the noise impact importance determination; and
control operation modes of the wind turbines in accordance with the determination of which, if any, wind turbines to operate in a noise reduced mode.

6. An apparatus in accordance with Claim 5 wherein said computer further configured to utilize an estimate of background noise to determine the noise impact importance of the wind turbines.

7. An apparatus in accordance with Claim 6 wherein said computer further configured to utilize a signal analysis module (148) to recognize noise signatures of at least the wind turbines from extraneous noise sources not related to wind turbines.

8. A generating system apparatus for generating electrical energy at a reduced far field (112) area noise impact, said generating system comprising:
a wind park (100) having plurality of wind turbines (102);
at least one site reference microphone (108) and a plurality of site boundary microphones (110); and
a computer (132) configured to:
monitor noise emission from said wind turbines utilizing said at least one site reference microphone and said plurality of site boundary microphones;
utilize a transfer function of noise emission to determine a noise impact importance of said wind turbines at one or more locations (112) in a far field beyond a boundary (104) of said wind park;
determine whether to operate any said wind turbines in a noise-reduced operation mode in accordance with the noise impact importance determination; and
generate control operation modes (172) of said wind turbines in accordance with the determination of whether to operate any said wind turbines in a noise-reduced mode.

9. A generating system in accordance with Claim 8 further comprising weather data sensors (138) configured to indicate atmospheric variations in a region (122) within which control of wind turbine noise is of interest, and wherein to determine a noise impact importance of said wind turbines at one or more locations (112) in the far field of said wind park, said computer further configured to utilize the weather data indicative of the atmospheric variations and a stratified atmospheric noise propagation model in making the noise impact importance determination.

10. A generating system in accordance with Claim 9 wherein said weather data sensors (138) comprise both ground level weather stations and hub level weather stations.
